# EUROPÄISCHE PATENTSCHRIFT

(11) **EP 0 822 687 B1**
(45) Veröffentlichungstag und Bekanntmachung des Hinweises auf die Patenterteilung: **24.02.2010**
(21) Anmeldenummer: 96110849.5
(22) Anmeldetag: 04.07.1996
(51) Int. Cl.: H04L 25/02, H04B 3/54

(54) **Bordnetzgenerator**
On-board power supply network
Réseau d'alimentation de bord

(43) Veröffentlichungstag der Anmeldung: 04.02.1998
(73) Patentinhaber: SIEMENS AKTIENGESELLSCHAFT, 80333 München (DE)
(72) Erfinder: Zierhut, Hermann, 93073 Neutraubling (DE)

(56) Entgegenhaltungen:
- DE-A- 4 424 907
- US-A- 4 429 366
- PATENT ABSTRACTS OF JAPAN vol. 010, no. 271 (P-497), 16.September 1986 & JP-A-61 094123 (STANLEY ELECTRIC CO LTD), 13.Mai 1986,
- PATENT ABSTRACTS OF JAPAN vol. 009, no. 069 (E-305), 29.März 1985 & JP-A-59 207737 (MATSUSHITA DENKI SANGYO KK), 24.November 1984,
- PATENT ABSTRACTS OF JAPAN vol. 004, no. 028 (E-001), 8.März 1980 & JP-A-55 001759 (MITSUBISHI ELECTRIC CORP), 8.Januar 1980,

## Beschreibung

Die Erfindung bezieht sich auf einen Bordnetzgenerator zum Bereitstellen von Gleichspannung in einem bestimmten relativ engen Toleranzbereich in einem Informationssystem, das Wechselspannungsinformation und Gleichspannung für das jeweilige Bordnetz von Teilnehmerstationen führt, im einzelnen nach Gattungsbegriff von Anspruch 1.

Zumindest ein Prozessor arbeitet üblicherweise mit einem relativ zu einer Referenzspannung gewonnenen Resetsignal in Form einer Resetspannung zum Zurücksetzen bei einer Bordnetzspannung außerhalb des Arbeitsbereichs. Hierbei wird mittels der Resetspannung durch einen Wert, beispielsweise "HIGH", angezeigt, daß die Bordnetzspannung im Sollarbeitsbereich zur Verfügung steht.

Derartige Bordnetzgeneratoren arbeiten üblicherweise mit Übertragern, wobei in der Praxis mehrere Referenzspannungen, meist zwei, zur Verfügung gestellt werden. Derartige Bordnetzgeneratoren können in Busankopplern eines Installationsbusses eingesetzt werden. Bedingt durch den Einsatz von Übertragern und die weitere Beschaltung hat ein derartiger Bordnetzgenerator einen bestimmten Raumbedarf, der nicht nennenswert vermindert werden kann.

In der Druckschrift DE 44 24 907 A1 wird für einen Busankoppler eine Schaltungsvorrichtung zur Auskopplung des Gleichspannungsanteils aus einem Information und Energie führenden Bus eines Bussystems, insbesondere der Gebäudetechnik, beschrieben, der bereits ohne Übertrager auskommt. Hierbei steht eine Ankoppelschaltung mit Steuereingang über diesen Steuereingang mit einer Ansteuerschaltung in Verbindung, wobei die Ansteuerschaltung Eingänge für ein Regelkriterium aufweist. Die Ankoppelschaltung ist derart ausgebaut und dimensioniert, dass sie in der Arbeitsweise einer Konstantstromquelle für die Frequenzen der Nachricht arbeitet und dass sie für niedrigere Frequenzen in Verbindung mit der Ansteuerschaltung als Regelschaltung arbeitet.

In der Druckschrift JP 61 094123 A wird eine Stabilisatorschaltung für eine Spannungsquelle mit einem Detektor für Spannungseinbrüche beschrieben. Hierbei befindet sich im Ansteuerzweig der Stabilisatorschaltung eine Zenerdiode, an deren Anode ein Widerstand angeschlossen ist, wobei die Verbindung zwischen Zenerdiode und dem Widerstand zusätzlich mit der Basis eines Transistors verbunden ist. Über diesen Transistor und einen diesem nachgeschalteten zweiten Transistor, der zusätzlich noch über einen Widerstand mit der Kathode der Zenerdiode verbunden ist, wird die Detektion und Signalisierung eines Einbruchs der Quellenspannung realisiert.

Der Erfindung liegt die Aufgabe zugrunde, einen Bordnetzgenerator zu entwickeln, der auf wirtschaftliche Weise ohne Übertrager auskommt und der insgesamt in einem verringerten Volumen untergebracht werden kann.

Die Lösung der geschilderten Aufgabe erfolgt durch einen Bordnetzgenerator nach Anspruch 1. An einer Halbleiterstrecke als Element für die Referenzspannung, insbesondere mit der Funktion einer Zenerdiode, ist die Referenzspannung dadurch bereitgestellt, daß der Wirkung nach in Serie hierzu ein erster Transistor mit seiner Basis-Emitter-Strecke geschaltet ist, wobei am ersten Transistor an seinem Kollektor die Resetspannung bereitgestellt wird. An der Serienschaltung aus Zenerdiode und Basis-Emitter-Strecke des ersten Transistors ist der Wirkung nach die Basis eines Emitterfolgers angeschlossen, an dessen Emitter die Bordnetzspannung bereitgestellt ist. Parallel zu seiner Basis-Emitter-Strecke und in Reihe zur Zenerdiode ist ein Widerstand geschaltet, an dem bei einem durch die Zenerdiode fließenden Strom im Sollarbeitsbereich eine den ersten Transistor leitend steuernde Spannung abfällt.

Die am Kollektor des ersten Transistors dann anstehende Spannung dient als HIGH des Resetsignals und ist also für den Sollarbeitsbereich charakteristisch. Wenn das Signal HIGH nicht ansteht, wird der Bordnetzgenerator zurückgesetzt. Der Bordnetzgenerator mit seiner Schaltung aus nur wenigen Bauelementen erzeugt eine stabilisierte Spannung und ein zuverlässiges Resetsignal. Bei dieser Schaltung kommt man mit einem einzigen Resetsignalgeber aus.

Bei einem Informationssystem, dessen einer Busleiter positive Gleichspannung und überlagerte Wechselspannung führt, können der Emitterfolger sowie die Serienschaltung über einen Widerstand hieran angeschlossen sein, wobei der erste Transistor einem npn-Transistor entspricht. Wenn der erste Transistor einem npn-Transistor entspricht, ist es vorteilhaft, diesem einen Inverter parallel zu schalten, wobei an dessen Kollektor das Resetsignal zur Verfügung steht. Diese Schaltung eignet sich besonders für weitere Schaltungen mit weiteren Vorteilen: Wenn parallel zur Basis-Emitter-Strecke des ersten Transistors ein zweiter Transistor in Diodenschaltung hinzugefügt wird, entsteht ein Spiegel aus erstem und zweitem Transistor, wodurch die Basis-Emitter-Strecke des ersten Transistors und des Emitterfolgers hinsichtlich des Temperaturkoeffizienten voll kompensiert werden können.

Es ist vorteilhaft, wenn der Inverter einen Kollektorwiderstand aufweist, der an die Kathode des Elementes für die Referenzspannung angeschlossen ist. Hierdurch erzielt man eine Hysterese für das Resetsignal.

Es ist auch vorteilhaft, von einem Anschluß zwischen der Anode des Elementes für die Referenzspannung und dem zweiten Transistor in Diodenschaltung eine Verbindung über einen Widerstand zum Ausgang für die Bereitstellung des Resetsignals besteht. Insbesondere ist es günstig, wenn der Widerstand dieses Transistors etwa den siebenfachen Wert des Kollektorwiderstandes aufweist. Dadurch wird die maximale Ausgangsspannung für das Resetsignal weitgehend auf die Höhe der Bordnetzspannung gebracht. Außerdem wird die Hysterese noch vergrößert.

Wenn zwischen dem Anschluß zum positiven Busleiter A und dem Anschluß der Basis des Inverters ein Widerstand angeschlossen ist, wird der Inverter auch bei kleinen Bordnetzspannungen kräftig angesteuert. Dadurch wird ein sauberes Resetsignal zum Zurücksetzen, ein "LOW"-Signal am Resetausgang erzielt.

Es ist besonders vorteilhaft, in die Kollektorleitung des Emitterfolgers einen Widerstand zur Strombegrenzung einzuschalten, da hierdurch der maximale Strom aus dem positiven Busleiter auch dann zuverlässig begrenzt wird, wenn am Ausgang des Bordnetzgenerators ein Kurzschluß auftritt.

Die Erfindung soll nun anhand von in der Zeichnung grob schematisch wiedergegebenen Ausführungsbeispielen näher erläutert werden:
In FIG 1 ist eine besonders einfache Ausführung des Bordnetzgenerators veranschaulicht, wobei man mit besonders wenigen Schaltungselementen auskommt.
In FIG 2 ist ein Ausführungsbeispiel dargestellt, das als Basis für besonders vorteilhafte Weiterbildungen dienen kann.
In FIG 3 ist der Bordnetzgenerator nach einer ersten Weiterbildung wiedergegeben.
In FIG 4 ist der Bordnetzgenerator nach einer besonders vorteilhaften Weiterbildung veranschaulicht.

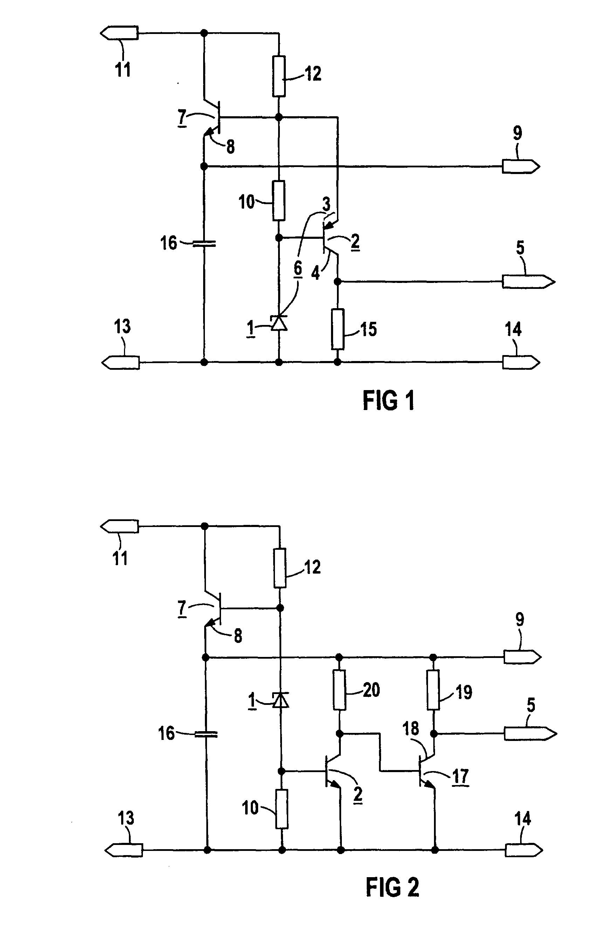

Der Bordnetzgenerator nach FIG 1 weist eine Halbleiterstrecke als Element 1 für die Referenzspannung, insbesondere mit der Funktion einer Zenerdiode, auf. Der Wirkung nach ist in Serie hierzu ein erster Transistor 2 mit seiner Basis-Emitter-Strecke 3 geschaltet, wobei am ersten Transistor an seinem Kollektor 4 die Resetspannung an einem Ausgang 5 bereitgestellt ist. An der Serienschaltung 6 aus Element 1, insbesondere mit der Funktion einer Zenerdiode, und aus der Basis-Emitter-Strecke 3 des ersten Transistors ist der Wirkung nach die Basis eines Emitterfolgers 7 angeschlossen, an dessen Emitter 8 die Bordnetzspannung für einen Ausgang 9 bereitgestellt ist. Parallel zur Basis-Emitter-Strecke des Emitterfolgers 7 und in Reihe zur Zenerdiode als Element 1 ist ein Widerstand 10 geschaltet. Bei einem durch das Element 1, bzw. durch die Zenerdiode, fließenden Strom bei Sollarbeitsbereich fällt am Widerstand 10 eine Spannung ab, die den ersten Transistor 2 leitend steuert. Die am Kollektor des ersten Transistors 2 dann anstehende Spannung dient als HIGH des Resetsignals. Dieser Zustand des Resetsignals signalisiert also die Arbeitsweise des Bordnetzgenerators im Sollarbeitsbereich.

Bei einem Informationssystem, dessen einer Busleiter 11 positive Gleichspannung und überlagerte Wechselspannung führt, sind der Emitterfolger 7 sowie die Serienschaltung 6 über einen Widerstand 12 angeschlossen und der erste Transistor 2 der Funktion nach als pnp-Transistor ausgeführt. Der Anschluß für einen zweiten Busleiter 13 ist an Masse 14 gelegt. Zwischen dem Anschluß 14 für Masse und dem Anschluß 5 für das Resetsignal ist ein Widerstand 15 als Kollektorwiderstand und als Arbeitswiderstand für das Resetsignal geschaltet. Als Weiche für Gleichstrom und Wechselstrom dient eine Kapazität 16.

Wenn das Element 1 für Referenzspannung, mit der Funktionsweise einer Zenerdiode, genügend Strom zieht, so daß der Sollarbeitspunkt erreicht wird, ist der Spannungsfall am Widerstand 10 ebenso groß wie an der Basis-Emitter-Strecke 3 des ersten Transistors 2. Hierbei geht der erste Transistor 2 in den eingeschalteten Zustand, so daß am Ausgang 5 positive Spannung als HIGH ansteht. Wird aus dem Ausgang 9 für die Bordnetzspannung so viel Strom entnommen, daß die Bordnetzspannung zusammenbricht, wird zwangsläufig die Basisspannung des Emitterfolgers 7 kleiner, wodurch der Strom durch das Element 1 so weit abnimmt, bis der Spannungsfall am Widerstand 10 kleiner ist als in der Basis-Emitter-Strecke 3. Dadurch geht der erste Transistor 2 in den gesperrten Zustand über, wodurch der Ausgang 5 für das Resetsignal an Masse gelegt wird und somit in den Zustand LOW übergeht. Eine derartige einfache Schaltung aus sieben Elementen nach FIG 1 erzeugt eine stabilisierte Bordnetzspannung am Ausgang 9 und zusätzlich zwangsläufig ein zuverlässiges Resetsignal. Die Schaltungselemente können als diskrete Bauelemente oder als Halbleiterbereiche in einem Chip oder als zusammenzusetzende Schaltungsteile in Teilchips realisiert sein. Wesentlich ist auch, daß man bei dieser Schaltung mit einer einzigen Referenz für das Resetsignal und die Bordnetzspannung auskommt.

Beim Ausführungsbeispiel nach FIG 2 ist einem ersten Transistor 2 in der Ausführung als npn-Transistor ein Inverter 17 parallel geschaltet, wobei an dessen Kollektor 18 der Ausgang 5 für das Resetsignal liegt. Der Inverter 17 weist einen Kollektorwiderstand 19 auf, der an der Bordnetzspannung 9 angeschlossen ist. Beim ersten Transistor 2 ist am Kollektor ein Kollektorwiderstand 20 angeschlossen.

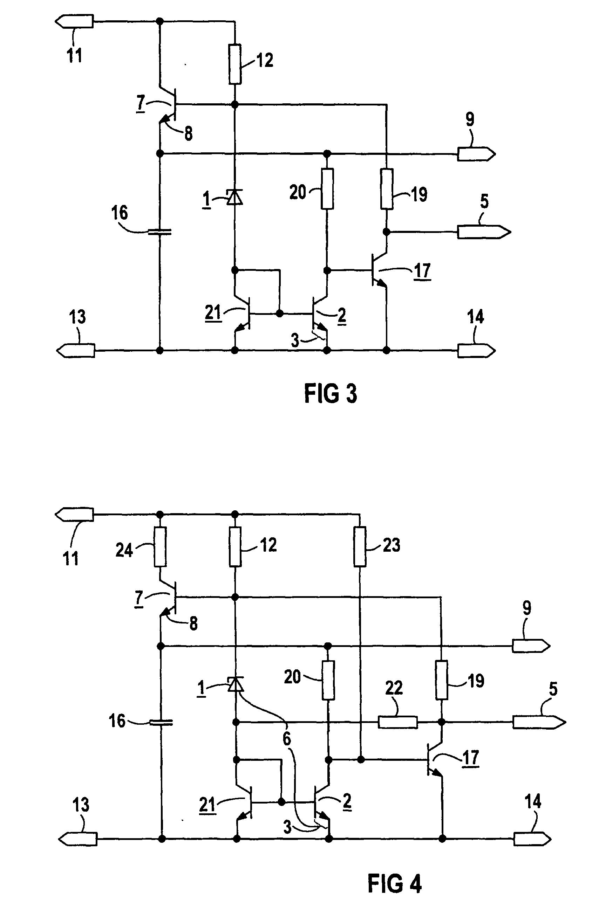

In FIG 3 ist eine Weiterbildung des Ausführungsbeispiels nach FIG 2 wiedergegeben. Parallel zur Basis-Emitter-Strecke 3 des ersten Transistors 2 ist ein zweiter Transistor 21 in Diodenschaltung geschaltet. Dadurch entsteht eine Spiegelschaltung, durch die die Temperaturkoeffizienten jeweils der Basis-Emitter-Strecke des ersten Transistors 2 und des Emitterfolgers 7 voll kompensiert werden können. Dadurch, daß der Kollektorwiderstand 19 des Inverters 17 an der Kathode des Elements 1 für die Referenzspannung, nicht wie in FIG 2 an den Ausgang 9 der Bordnetzspannung, angeschlossen ist, entsteht am Ausgang 5 für die Resetspannung eine Hysterese. Der Strom durch den Widerstand 12 wird im Moment des Umschaltens des Inverters 17 vergrößert, wenn ein Strom durch den Kollektorwiderstand 19 zusätzlich zum Strom in das Element 1 hinzukommt. Der Kollektorwiderstand 19 wirkt als Arbeitswiderstand für das Resetsignal.

In der Weiterbildung nach FIG 4 kommen zu den Schaltungselementen nach FIG 3 weitere Schaltungselemente mit wesentlichen weiteren Vorteilen hinzu:

Von einem Anschluß zwischen der Anode des Elementes 1 für die Referenzspannung und dem zweiten Transistor 21 in Diodenschaltung ist eine Verbindung über einen Widerstand 22 zum Ausgang 5 für die Bereitstellung des Resetsignals eingeschaltet. Es ist günstig, wenn der Widerstand 22 etwa den siebenfachen Wert des Kollektorwiderstandes 19 aufweist. Weiter ist zwischen dem Anschluß 11 zum positiven Busleiter und dem Anschluß der Basis des Inverters 17 ein Widerstand 23 als Ansteuerwiderstand angeschlossen. Der Inverter 17 wird dadurch auch dann kräftig angesteuert, wenn die Bordnetzspannung am Ausgang 9 anfänglich noch sehr klein ist, wodurch am Ausgang 5 für das Resetsignal ein deutliches LOW anliegt. Durch einen Widerstand 24 in der Kollektorleitung des Emitterfolgers 7 erzielt man eine Strombegrenzung auf einen gewünschten maximalen Strom aus dem positiven Busleiter 11 auch dann, wenn am Anschluß 9 zur Abgabe der Bordnetzspannung ein Kurzschluß auftritt.

Beim Ausführungsbeispiel nach FIG 2 und den Weiterbildungen nach den FIG 3 und 4 besteht zu einem Ausführungsbeispiel nach FIG 1 der wesentliche Unterschied, daß in der Arbeitsphase durch den Widerstand 15 bzw.19 als Arbeitswiderstand für das Resetsignal kein Strom fließt, so daß die Schaltungen nach den FIG 2 bis 4 Strom sparen. Der Strom durch den Kollektorwiderstand 20 ist sehr viel kleiner als der Strom durch den Widerstand 15 bzw.19, wenn der Kollektorwiderstand 20 größer als der Widerstand 19 ist. Die Grundfunktion der Schaltungen stimmt unter Einschluß der Schaltung nach FIG 1 überein: Wenn der Strom durch das Element 1 für die Referenzspannung so groß ist, daß die Schaltung im Sollarbeitsbereich arbeitet, ist der Spannungsfall am Widerstand 10 so groß, daß der erste Transistor 2 in den leitenden Zustand gesteuert wird. Dadurch wird bei den Ausführungen nach den FIG 2 bis 4 der Inverter 17 gesperrt, wodurch das Resetsignal auf HIGH springt.

## Patentansprüche

1. Bordnetzgenerator zum Bereitstellen von Gleichspannung in einem bestimmten relativ engen Toleranzbereich in einem Informationssystem, das Wechselspannungsinformation und Gleichspannung für das jeweilige Bordnetz von Teilnehmerstationen führt, wobei zumindest ein Prozessor mit einem relativ zu einer Referenzspannung gewonnenen Resetsignal in Form einer Resetspannung zum Zurücksetzen bei einer Bordnetzspannung außerhalb des Arbeitsbereichs arbeitet, und wobei die Resetspannung durch einen Wert anzeigt, daß die Bordnetzspannung im Sollarbeitsbereich zur Verfügung steht,
**dadurch gekennzeichnet,**
**daß** an einer Halbleiterstrecke als Element (1) für die Referenzspannung, mit der Funktion einer Zenerdiode, die Referenzspannung **dadurch** bereitgestellt ist, daß der Wirkung nach in Serie zum Element (1) ein erster Transistor (2) mit seiner Basis-Emitter-Strecke (3) geschaltet ist, wobei am ersten Transistor (2) an seinem Kollektor (4) die Resetspannung bereitgestellt ist, und daß an der Serienschaltung (6) aus dem Element (1) und der Basis-Emitter-Strecke (3) des ersten Transistors (2) der Wirkung nach die Basis eines Emitterfolgers (7) angeschlossen ist, an dessen Emitter (8) die Bordnetzspannung bereitgestellt ist, wobei parallel zu seiner Basis-Emitter-Strecke und in Reihe zum Element (1) ein Widerstand (10) geschaltet ist, an dem sich bei einem durch das Element (1) fließenden Strom im Sollarbeitsbereich eine den ersten Transistor (2) leitend steuernde Spannung abfällt, wobei die am Kollektor (4) des ersten Transistors (2) dann anstehende Spannung als HIGH des Resetsignals für den Sollarbeitsbereich zur Verfügung steht.

2. Bordnetzgenerator nach Anspruch 1,
**dadurch gekennzeichnet,**
**daß** bei einem Informationssystem, dessen einer Busleiter (11) positive Gleichspannung mit überlagerter Wechselspannung führt, der Emitterfolger (7) sowie die Serienschaltung (6) über einen Widerstand (12) hieran angeschlossen sind und der erste Transistor (2) einem pnp-Transistor entspricht.

3. Bordnetzgenerator nach Anspruch 1,
**dadurch gekennzeichnet,**
**daß** bei einem Informationssystem, dessen einer Busleiter positive Gleichspannung mit überlagerter Wechselspannung führt, der Emitterfolger (7) sowie die Serienschaltung (6) über einen Widerstand (12) hieran angeschlossen sind und der erste Transistor (2) einem npn-Transistor entspricht, dem ein Inverter (17) parallel geschaltet ist, wobei an dessen Kollektor (18) das Resetsignal zur Verfügung steht.

4. Bordnetzgenerator nach Anspruch 3,
**dadurch gekennzeichnet,**
**daß** parallel zur Basis-Emitter-Strecke (3) des ersten Transistors (2) ein zweiter Transistor (21), in Diodenschaltung, geschaltet ist.

5. Bordnetzgenerator nach Anspruch 3 oder 4,
**dadurch gekennzeichnet,**
**daß** der Inverter (17) einen Kollektorwiderstand (19) aufweist, der an die Kathode des Elementes (1) für die Referenzspannung angeschlossen ist.

6. Bordnetzgenerator nach Anspruch 4,
**dadurch gekennzeichnet,**
**daß** von einem Anschluß zwischen der Anode des Elementes (1) für die Referenzspannung und dem zweiten Transistor (21) in Diodenschaltung eine Verbindung über einen Widerstand (22) zum Ausgang (5) für die Bereitstellung des Resetsignals besteht, wobei dieser Widerstand (22) etwa den siebenfachen Wert des Kollektorwiderstandes aufweist.

7. Bordnetzgenerator nach Anspruch 6,
**dadurch gekennzeichnet,**
**daß** zwischen dem Anschluß (11) zum positiven Busleiter und dem Anschluß der Basis des Inverters (17) ein Widerstand (23) angeschlossen ist.

8. Bordnetzgenerator nach einem der Ansprüche 1 bis 7,
**dadurch gekennzeichnet,**
**daß** in die Kollektorleitung des Emitterfolgers (7) ein Widerstand (24) zur Strombegrenzung eingeschaltet ist.

## Claims

1. On-board power supply generator for providing dc voltage in a specific relatively narrow tolerance range in an information system which carries alternating current information and dc voltage from user stations for the respective on-board network, with at least one processor operating with a reset signal obtained relative to a reference voltage in the form of a reset voltage for resetting for an on-board network voltage outside the working range, and with the reset voltage indicating by a value that the on-board network voltage is available in the required working range,
**characterised in that**,
the reference voltage is provided on a semiconductor path as element (1) for the reference voltage, with the function of a Zener diode such that, according to the effect, a first transistor (2) is connected in series with the element (1) with its base-emitter path (3), with the reset voltage being provided at the first transistor (2) at its collector (4), and that the base of an emitter follower (7) is connected to the series connection (6) comprising the element (1) and the base-emitter path (3) of the first transistor (2) according to the effect, the on-board network voltage is provided at its emitter (8), with a resistance (10) being connected in parallel to its base-emitter path and in series with the element (1) at which, for a current in the required working range flowing through the element (1), a voltage switching the first transistor (2) to conductive falls, with the voltage then present at the collector (4) of the first transistor (2) as HIGH of the reset signal being available for the required working range.

2. The on-board power supply generator according to claim 1,
**characterised in that**,
for an information system, of which one bus conductor (11) carries positive dc voltage with overlaid ac voltage, the emitter follower (7) and also the series circuit (6) are connected to this via a resistance (12) and the first transistor (2) corresponds to a pnp transistor.

3. The on-board power supply generator according to claim 1,
**characterised in that**,
for an information system, of which one bus conductor carries positive dc voltage with overlaid ac voltage, the emitter follower (7) and also the series circuit (6) are connected to this via a resistance (12) and the first transistor (2) corresponds to an npn transistor, to which an inverter (17) is connected in parallel, with the reset signal being available at its collector (18).

4. The on-board power supply generator according to claim 3,
**characterised in that**
a second transistor (21), in a diode circuit, is connected in parallel to the base-emitter path (3) of the first transistor (2).

5. The on-board power supply generator according to claim 3 or 4,
**characterised in that**
the inverter (17) has a collector resistance (19) which is connected to the cathode of the element (1) for the reference voltage.

6. The on-board power supply generator according to claim 4,
**characterised in that**
a connection exists from a terminal between the anode of the element (1) for the reference voltage and the second transistor (21) in the diode circuit via a resistance (22) to output (5) for providing the reset signal, with this resistance (22) having approximately seven times the value of the collector resistance.

7. The on-board power supply generator according to claim 6,
**characterised in that**
a resistance (23) is connected between the terminal (11) to the positive bus and the terminal of the base of the inverter (17).

8. The on-board power supply generator according to one of claims 1 to 7,
**characterised in that**
a resistance (24) for current limiting is switched into the collector line of the emitter follower (7).

## Revendications

1. Générateur de réseau d'alimentation de bord pour la mise à disposition d'une tension continue dans un certain domaine de tolérance relativement étroit dans un système d'information qui fournit une information de tension alternative et une tension continue pour le réseau d'alimentation de bord respectif de stations d'abonnés, au moins un processeur fonctionnant avec un signal de réinitialisation obtenu par rapport à une tension de référence, et se présentant sous la forme d'une tension de réinitialisation, pour la réinitialisation lorsqu'une tension de réseau d'alimentation de bord est hors du domaine de fonctionnement et la tension de réinitialisation indiquant par une valeur que la tension de réseau d'alimentation de bord est disponible dans le domaine de fonctionnement théorique,
**caractérisé en ce que**
à un tronçon semi-conducteur en tant qu'élément (1) pour la tension de référence, ayant la fonction d'une diode de Zener, la tension de référence est mise à disposition du fait qu' un premier transistor (2) est branché avec son tronçon base-émetteur (3) en série, selon l'effet, avec l'élément (1), la tension de réinitialisation étant mise à disposition au niveau du collecteur (4) du premier transistor (2), et **en ce que**, au circuit-série (6) formé par l'élément (1) et par le tronçon base-émetteur (3) du premier transistor (2), est reliée, selon l'effet, la base d'un émetteur suiveur (7), à l'émetteur (8) duquel la tension de réseau d'alimentation de bord est mise à disposition, une résistance (10) étant branchée en parallèle à son tronçon base-émetteur et en série avec l'élément (1), résistance (10) dans laquelle une tension commandant l'état passant du premier transistor (2) chute, dans le domaine de fonctionnement théorique, lorsque l'élément (1) est parcouru par un courant, la tension appliquée alors au collecteur (4) du premier transistor (2) étant disponible en tant que niveau HAUT du signal de réinitialisation pour le domaine de fonctionnement théorique.

2. Générateur de réseau d'alimentation de bord selon la revendication 1,
**caractérisé en ce que**,
dans un système d'information dont un conducteur de bus (11) fournit une tension continue positive à laquelle une tension alternative est superposée, l'émetteur suiveur (7) et le circuit série (6) sont reliés à celui-ci par le biais d'une résistance (12) et le premier transistor (2) correspond à un transistor PNP.

3. Générateur de réseau d'alimentation de bord selon la revendication 1,
**caractérisé en ce que**,
dans un système d'information dont un conducteur de bus fournit une tension continue positive à laquelle une tension alternative est superposée, l'émetteur suiveur (7) et le circuit série (6) sont reliés à celui-ci par le biais d'une résistance (12) et le premier transistor (2) correspond à un transistor NPN avec lequel un inverseur (17) est branché en parallèle, le signal de réinitialisation étant disponible au niveau de son collecteur (18).

4. Générateur de réseau d'alimentation de bord selon la revendication 3,
**caractérisé**
**en ce qu'**un second transistor (21) est branché sous forme de circuit à diode en parallèle avec le tronçon base-émetteur (3) du premier transistor (2).

5. Générateur de réseau d'alimentation de bord selon la revendication 3 ou 4,
**caractérisé**
**en ce que** l'inverseur (17) comprend une résistance de collecteur (19) qui est reliée à la cathode de l'élément (1) pour la tension de référence.

6. Générateur de réseau d'alimentation de bord selon la revendication 4,
**caractérisé en ce qu'**il existe, par le biais d'une résistance (22), une connexion allant d'une jonction entre l'anode de l'élément (1) pour la tension de référence et le second transistor (21) branché sous forme de circuit à diode vers la sortie (5) pour la mise à disposition du signal de réinitialisation, cette résistance (22) ayant une valeur à peu près égale à sept fois la valeur de la résistance de collecteur.

7. Générateur de réseau d'alimentation de bord selon la revendication 6,
**caractérisé**
**en ce qu'**une résistance (23) est branchée entre la jonction (11) avec le conducteur de bus positif et la jonction avec la base de l'inverseur (17).

8. Générateur de réseau d'alimentation de bord selon l'une des revendications 1 à 7,
**caractérisé en ce qu'**une résistance (24) de limitation de courant est intercalée dans le tronçon de collecteur de l'émetteur suiveur (7).
